# EUROPÄISCHE PATENTSCHRIFT

(11) **EP 1 015 804 B1**
(45) Veröffentlichungstag und Bekanntmachung des Hinweises auf die Patenterteilung: **21.05.2003**
(21) Anmeldenummer: 98945184.4
(22) Anmeldetag: 08.08.1998
(51) Int. Cl.: F16L 33/207

(54) **ANSCHLUSSVORRICHTUNG FÜR EIN ROHR- ODER SCHLAUCHTEIL**
COUPLER FOR A PIPE OR HOSE SECTION
DISPOSITIF DE RACCORDEMENT POUR UNE PARTIE DE TUBE OU DE TUYAU

(30) Priorität: 22.09.1997 DE 19741641
(43) Veröffentlichungstag der Anmeldung: 05.07.2000
(73) Patentinhaber: WAVIN B.V., 8011 CW Zwolle (NL)
(72) Erfinder: BOER, Hans, NL-7772 AK Hardenberg (NL); BREUKELMAN, Hartmut, D-49828 Neuenhaus (DE); SPYKMAN, Johannes, D-49824 Emlichheim (DE)
(74) Vertreter: Busse & Busse Patentanwälte
(86) Internationale Anmeldenummer: EP9805035
(87) Internationale Veröffentlichungsnummer: WO99015825

(56) Entgegenhaltungen:
- EP-A- 0 062 480
- DE-A- 3 003 368
- DE-A- 19 603 228
- FR-A- 1 160 833
- GB-A- 1 065 480
- US-A- 4 407 532

## Beschreibung

Die Erfindung betrifft eine Anschlußvorrichtung für ein Rohr- oder Schlauchteil nach dem Oberbegriff des Anspruchs 1.

Bei einer bekannten Anschlußvorrichtung dieser Art (DE-A-196 03 228) ist ein Anschlußkörper vorgesehen, der einen mit diesem einstückigen Anschlußstutzen mit umlaufenden Rippen aufweist. Die Anschlußvorrichtung umfaßt ferner eine mit dem Anschlußkörper vorverbindbare Preßhülse, die in Verbindungsstellung mit ihrem Stirnende einen dem Anschlußstutzen benachbarten, im wesentlichen ringförmigen Halteteil des Anschlußkörpers klemmend umgreift. Die Klemmkraft resultiert aus einer durch mehrere über den Umfang des aufschiebbaren Endes verteilt angeordnete Ausschnitte begünstigten Nachgiebigkeit des Endbereiches der Preßhülse.

Aus der US 4 407 532 ist eine Anschlußvorrichtung für ein Schlauchteil bekannt, die einen Anschlußkörper mit angeformtem Anschlußstutzen sowie eine mit dem Anschlußkörper vorverbindbare Preßhülse aufweist. Bei der Verwendung dieser Anschlußvorrichtung wird ein anzuschließendes Schlauchende in den sich zwischen Anschlußstutzen und Preßhülse ergebenden Ringspalt eingeführt und durch konzentrisches Zusammenpressen der Preßhülse mit der Anschlußvorrichtung verbunden.

Die erwünschte Vorverbindung zwischen Anschlußkörper und Preßhülse wird bei der bekannten Anschlußvorrichtung dadurch erreicht, daß die Preßhülse mit ihrem Stirnende über den dem Anschlußstutzen benachbarten Bereich des Anschlußkörpers geschoben und ein von der Preßhülse einwärts vorspringender Halteansatz durch plastische Verformung in eine ihm zugeordnete ringförmige Haltenut des Anschluß körpers eingepreßt wird. Da der Innendurchmesser des Halteansatzes der Preßhülse, um diese über den zwischen Haltenut und Anschlußstutzen gebildeten ringförmigen Vorsprung aufschieben zu können, vor der Erzielung der Vorverbindung größer als der Außendurchmesser des ringförmigen Vorsprungs ist, müssen für die Vorverbindung zur plastischen Verformung erhebliche Preßkräfte aufgebracht werden, wozu Spezialwerkzeug erforderlich ist. Auch ist die Ausschußrate an Anschlußvorrichtungen bei der Herstellung der Vorverbindung relativ hoch. Ferner eignet sich die erwähnte Vorverbindung zwischen Anschlußkörper und Preßhülse nicht für den Einsatz von Anschlußkörpern aus Kunststoff, da diese den auf sie bei der Herstellung der Vorverbindung ausgeübten Druckkräften nicht standhalten würden. Der Einsatz von Anschlußkörpern aus Kunststoff ist jedoch im Hinblick auf die Verwendung zum Anschluß an wasserführende Rohre oder Schläuche vorteilhaft.

Der Erfindung liegt daher das Problem zugrunde, eine gattungsgemäße Anschlußvorrichtung anzugeben, bei der Anschlußkörper und Preßhülse auf einfache und fertigungstechnisch kostengünstige Weise sicher miteinander vorverbindbar sind.

Erfindungsgemäß wird diese Aufgabe durch eine Vorrichtung mit den Merkmalen des Anspruchs 1 gelöst.

Durch den Einsatz einer Rast- oder Riegelverbindung kann die Vorverbindung von Anschlußkörper und Preßhülse ohne Werkzeug schnell und einfach und ohne Gefahr des Eintretens von Beschädigungen bewirkt werden. Anschlußkörper und Preßhülse gelangen dabei in eine formschlüssige Verbindung, die ohne Werkzeug hergestellt und wieder aufgelöst werden kann und einen sicheren Zusammenhalt der Teile gewährleistet.

Bei der Wahl einer Rastverbindung empfiehlt es sich, das Stirnende mit der Preßhülse elastisch verformbar auszugestalten, wobei das Stirnende der Preßhülse vorzugsweise bei Rückfederung in Rasteingriff mit dem Anschlußkörper gelangt.

Die erfindungsgemäße Anschlußvorrichtung eignet sich in vorteilhafter Weise für die Verwendung von Kunststoff, insbesondere Polymere wie Polysulfon oder Polyphenylsulfon, als Material für den Anschlußkörper, wobei die Preßhülse aus rostfreiem Stahl bestehen kann.

Mit einer solchen Anschlußvorrichtung können Rohr- oder Schlauchteile mit einem beliebigen weiteren Anschlußteil wie einem weiteren Rohroder Schlauchteil verbunden werden. Selbstverständlich sind von der erfindungsgemäßen Anschlußvorrichtung auch Ausführungsformen als T-Stück, Übergangsstücke, Krümmer, Übergänge zu innen- oder außengewindeten Bereichen oder dgl. möglich.

Weitere Vorteile und Einzelheiten ergeben sich aus einem in der Zeichnung dargestellten Ausführungsbeispiel der Erfindung, das im folgenden erläutert wird; es zeigen:
- Fig. 1: eine Draufsicht auf die erfindungsgemäße Anschlußvorrichtung,
- Fig. 2: den Anschlußkörper nach Fig. 1 in Einzeldarstellung,
- Fig. 3: eine Seitenansicht aus der Richtung III in Fig. 2,
- Fig. 4: einen Schnitt nach der Linie IV-IV in Fig. 2,
- Fig. 5: einen Schnitt nach der Linie V-V in Fig. 3, und
- Fig. 6: eine Vergrößerung des Ausschnittes VI in Fig. 5.

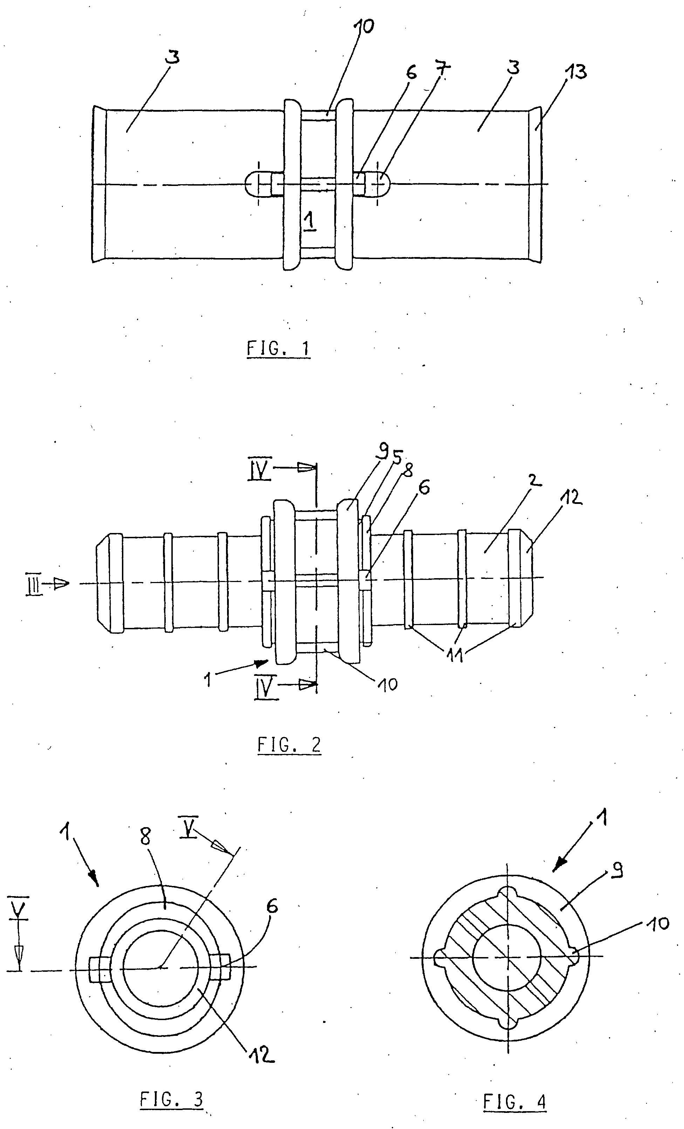

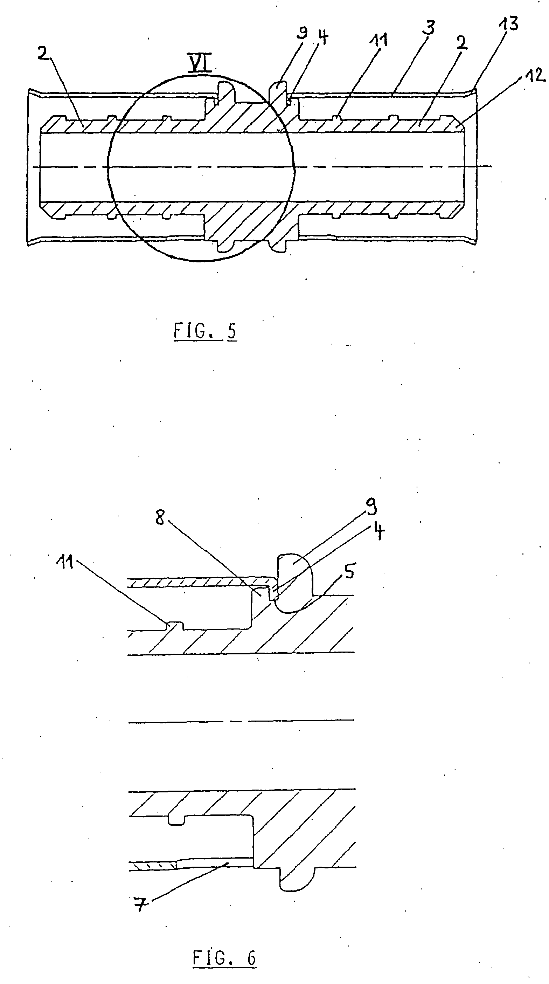

Die in den Fig. 1 und 5 dargestellte Anschlußvorrichtung weist im einzelnen einen Änschlußkörper 1 auf, der in zwei sich zu beiden Seiten erstreckende Anschlußstutzen 2 übergeht. Jedem Anschlußstutzen 2 ist eine mit dem Anschlußkörper 1 verbundene Preßhülse 3 zugeordnet, die jeweils an ihrer dem freien Ende des Anschlußstutzens 2 abgewandten Stirnseite nach innen umgebogen ist und dadurch einen Halteansatz 4 bildet, der in eine nahezu vollständig umlaufende Haltenut 5 des Anschlußkörpers 1 eingreift.

Bei der dargestellten Ausführungsform wird jede Haltenut 5 an zwei gegenüberliegenden Stellen durch Vorsprünge 6 unterbrochen. Die Preßhülsen 3 weisen den Vorsprüngen 6 entsprechende als Durchbrüche 7 ausgeführte Ausnehmungen auf, in die die Vorsprünge 6 eingreifen und eine Verdrehung der Preßhülsen 3 gegen den Anschlußkörper 1 verhindern. Der Innenradius der Preßhülse 3 und der Außenradius der Vorsprünge 6 sind dabei so eng aneinander angepaßt, daß die erzielte Rotationssicherung bei Überschreiten einer bestimmten auf die Preßhülse 3 oder den Anschlußkörper 1 ausgeübten Torsionskraft nachgibt und eine Drehung der Preßhülse 3 in Umfangsrichtung ermöglicht. Die Verdrehsicherung bildet dadurch zusätzlich eine Überlastsicherung und verhindert so beispielsweise das Abscheren eines mit der Anschlußvorrichtung verbundenen Rohres oder Schlauches.

Im übrigen sind die Durchbrüche 7 so ausgestaltet, daß sie in axialer Richtung der Anschlußvorrichtung länger als die Vorsprünge 6 sind und damit ein Sichtfenster für die Kontrolle der korrekten Einschubtiefe der zu verbindenden Rohr- oder Schlauchteile ermöglichen.

Jede Haltenut 5 unterteilt den eine Preßhülse 3 haltenden Bereich des Anschlußkörpers 1 in eine Ringschulter 8 und einen den Außendurchmesser der Preßhülse 3 überragenden flanschartigen Vorsprung 9, dessen der Preßhülse 3 zugewandte Fläche plan ausgebildet ist und eine Führung bzw. einen Positionierungsanschlag für eine Preßzange bildet. Der Anschlußkörper 1 ist in seinem mittleren Bereich zwischen den beiden flanschartigen Vorsprüngen 9 durch vier in Umfangrichtung mit gleichen Abständen in Längsrichtung des Anschlußkörpers 1 angeordneten Rippen 10 versteift. Jeder der beiden Anschlußstutzen 2 weist drei radial umlaufende Rippen 11 auf, die die Abdichtungsfunktion übernehmen, wodurch ein Dichtring und eine zum Einlegen desselben in den Anschlußstutzen 2 eingebrachte umlaufende Rille entbehrlich sein kann. Die jeweils äußerste Rippe 11 geht bei der abgebildeten Ausführungsform in einen konischen Bereich 12 über, der in Verbindung mit einem nach außen aufgeweiteten Bereich 13 der Preßhülse 3 das Einschieben eines Schlauch- oder Rohrteiles erleichtert.

Die die Preßhülse 3 haltende Ringschulter 8 ist mit einem ovalen Querschnitt ausgebildet (Fig. 3). Die Stellen größeren Durchmessers der Ringschulter 8 sind dabei zu den Bereichen, in denen sich Vorsprünge 6 befinden, um 90° verdreht angeordnet. Zur Vorverbindung der Preßhülse 3 mit dem Anschlußkörper 1 kann die Preßhülse 3 durch Druck auf die die Durchbrüche 7 aufweisenden Bereiche vorübergehend ovalförmig verformt und über die Ringschulter 8 aufgeschoben werden. Bei Entlastung federt die Preßhülse 3 in ihre ursprüngliche, runde Form zurück und rastet mit ihren ringförmigen Halteansätzen 4 hinter den den Innendurchmesser der Halteansätze 4 überschreitenden Bereichen der Ringschulter 8 ein, so daß eine sichere Vorverbindung gegeben ist.

## Patentansprüche

1. Anschlußvorrichtung für ein Rohr- oder Schlauchteil, mit einem Anschlußkörper (1), zumindest einem mit diesem einstückigen Anschlußstutzen (2) mit zumindest einer umlaufenden Rippe (11) und einer mit dem Anschlußkörper (1) vorverbindbaren Preßhülse (3), die in Verbindungsstellung mit ihrem Stirnende einen dem Anschlußstutzen (2) benachbarten, im wesentlichen ringförmigen Halteteil des Anschlußkörpers (1) umgreift, **dadurch gekennzeichnet, daß** die Preßhülse (3) einen einwärts vorspringenden, ringförmigen Halteansatz (4) und der Halteteil eine im wesentlichen ringförmige Haltenut (5) aufweist, die auf seiten des Anschlußstutzens (2) von einer Ringschulter (8) begrenzt ist, die Ringschulter (8) im radialen Querschnitt eine annähernd ovalförmige Außenkontur aufweist, die Preßhülse (3) mitsamt dem Halteansatz (4) durch Zusammendrücken vorübergehend elastisch ovalförmig verformbar ist und nach Aufschieben ihres Stirnendes auf den Halteteil des Anschlußkörpers (1) und anschließendem Rückfedern mit ihrem Halteansatz (4) bereichsweise in die Haltenut (5) eingreift.

2. Anschlußvorrichtung nach Anspruch 1, **dadurch gekennzeichnet, daß** die maximale Erstreckung der Ringschulter (8) von der Mittelachse des Anschlußkörpers (1) aus größer und die minimale Erstreckung der Ringschulter (8) von der Mittelachse des Anschlußkörpers (1) aus kleiner als der Innendurchmesser des Halteansatzes (4) der Preßhülse (3) ist.

3. Anschlußvorrichtung nach Anspruch 1 oder 2, **dadurch gekennzeichnet, daß** der Anschlußkörper (1) wenigstens einen Vorsprung (6) aufweist, der in eine zugeordnete Ausnehmung (7) im Stirnende der Preßhülse (3) einführbar ist.

4. Anschlußvorrichtung nach Anspruch 3, **dadurch gekennzeichnet, daß** die Ausnehmung (7) im Stirnende der Preßhülse (3) zugleich ein Sichtfenster für eine Kontrolle der Einschubtiefe des Rohr- oder Schlauchteils bildet.

5. Anschlußvorrichtung nach Anspruch 3, **dadurch gekennzeichnet, daß** der Innenradius der Preßhülse (3) nur geringfügig kleiner ist als der Abstand des Vorsprungs (6) von der Mittelachse des Anschlußkörpers (1) derart, daß bei Ausübung einer bestimmten Torsionskraft auf die Preßhülse (3) diese über den Vorsprung (6) hinweg verdrehbar ist.

6. Anschlußvorrichtung nach einem der Ansprüche 1 bis 5, **dadurch gekennzeichnet, daß** der Anschlußkörper (1) aus Kunststoff, insbesondere einem Polymer wie Polysulfon oder Polyphenylsulfon, besteht.

7. Anschlußvorrichtung nach einem der Ansprüche 1 bis 6, **dadurch gekennzeichnet, daß** der sich an die Haltenut (5) anschließende, der Ringschulter (8) gegenüberliegende Bereich des Anschlußkörpers (1) einen größeren Durchmesser als der Außendurchmesser der Preßhülse (3) aufweist und eine Führung für eine Preßzange bildet.

## Claims

1. A coupler for a pipe or hose section with a coupling body (1) with at least one coupling adaptor (2) integral with it, having at least one circumferential rib (11) and a push-on sleeve (3) that can be pre-connected to the coupling body (1), with the front end of the push-on sleeve (3) engaging in the essentially ring-shaped retaining part of the coupling body (1) adjacent to the coupling adaptor (2), **characterised in that** the push-on sleeve (3) has an inwards pre-sprung annular retaining shoulder (4) and the retaining part has an essentially annular retaining groove (5) that is limited on the side of the coupling adapter (2) by an annular shoulder (8), the annular shoulder (8) has an almost oval-shaped external contour in radial cross-section, the push-on sleeve (3) complete with the retaining shoulder (4) can be temporarily resiliently deformed to an oval shape by pressing together and, after its front end as been pushed over the retaining of the coupling body (1) and then sprung back, its retaining shoulder (4) engages in areas of the retaining groove (5).

2. Coupler in accordance with claim 1, **characterised in that** the maximum, extension of the annular shoulder (8) outwards from the centre axis of the coupling body (1) is greater, and the minimum extension of the annular shoulder (8) outwards from the centre axis of the coupling body (1) is smaller, than the internal diameter of the retaining shoulder (4) of the push-on sleeve (3).

3. Coupler in accordance with claim 1 or 2, **characterised in that** the coupling body (1) has at least one projection (6) that can be inserted into an allocated recess (7) in the front end of the push-on sleeve (3).

4. Coupler in accordance with claim 3, **characterised in that** the recess (7) in the front end of the push-on sleeve (3) also forms a viewing window for checking the depth of insertion of the tube or hose.

5. Coupler in accordance with claim 3, **characterised in that** the internal radius of the push-on sleeve (3) is only slightly less than the distance of the projection (6) from the centre axis of the coupling body (1), in such a way that when a certain torsional force is exerted on the push-on sleeve (3) it can be rotated past the projection (6).

6. Coupler in accordance with one of claims 1 to 5, **characterised in that** the coupling body (1) is made of plastic, in particular a polymer such a polysulphone or polyphenylenesulphone.

7. Coupler in accordance with one of claims 1 to 6, **characterised in that** the area of the coupling body (1) connected to the retaining groove (5) and opposite the annular shoulder (8) has a larger diameter than the external diameter of the push-on sleeve (3) and forms a guide for press-in pliers.

## Revendications

1. Dispositif de raccordement pour un élément du type tube ou tuyau, comprenant un corps de raccordement (1), au moins un ajutage de raccordement (2) formé en une seule pièce avec ce corps et possédant au moins une nervure périphérique (11), et un manchon de pression (3) qui peut être assemblé préalablement au corps de raccord (1) et qui, dans la position d'assemblage, entoure par son extrémité frontale, une partie de retenue sensiblement annulaire du corps de raccordement (1) qui est proche de l'ajutage de raccordement (2),
**caractérisé en ce que**
le manchon de pression (3) présente une saillie de retenue annulaire (4) qui se projette vers l'intérieur et la partie de retenue présente une gorge de retenue (5) sensiblement annulaire, qui est limitée par un épaulement annulaire (8) sur le côté de l'ajutage de raccordement (2), l'épaulement annulaire (8) présente, en coupe radiale, un contour extérieur à peu près ovale, le manchon de pression (3), réuni à la saillie de retenue (4) peut être préalablement déformé élastiquement en ovale par compression et, après emboîtement de son extrémité frontale sur la partie de retenue du corps de raccordement (1) et retour élastique consécutif, s'engage par endroits dans la gorge de retenue (5) par sa saillie de retenue (4).

2. Dispositif de raccordement selon la revendication 1,
**caractérisé en ce que**
l'étendue maximale de l'épaulement annulaire (8) à partir de l'axe médian du corps de raccordement (1) est plus grande que le diamètre intérieur de la saillie de retenue (4) du manchon de pression (3), et l'étendue minimale de l'épaulement annulaire (8) à l'axe médian du corps de raccordement (1) est plus petite que ce diamètre.

3. Dispositif de raccordement selon la revendication 1 ou 2,
**caractérisé en ce que**
le corps de raccordement (1) présente au moins une protubérance (6) qui peut être engagée dans un évidement correspondant (7) de l'extrémité frontale du manchon de pression (3).

4. Dispositif de raccordement selon la revendication 3,
**caractérisé en ce que**
l'évidement (7) de l'extrémité frontale du manchon de pression (3) forme en même temps un regard pour le contrôle de la profondeur d'emmanchement de la partie de tube ou de tuyau.

5. Dispositif de raccordement selon la revendication 3,
**caractérisé en ce que**
le rayon intérieur du manchon de pression (3) n'est que légèrement inférieur à la distance de la protubérance (6) à l'axe médian du corps de raccordement (1) de telle sorte que si l'on exerce une certaine force de torsion sur le manchon de pression (3) on peut le faire tourner en franchissant la protubérance (6).

6. Dispositif de raccordement selon une des revendications 1 à 5,
**caractérisé en ce que**
le corps de raccordement (1) est fait de matière plastique, en particulier d'un polymère tel qu'un polysulfone ou un polyphénylsulfone.

7. Dispositif de raccordement selon une des revendications 1 à 6,
**caractérisé en ce que**
la région du corps de raccordement (1) qui fait suite à la gorge de retenue (5), et qui fait face à l'épaulement annulaire (8) présente un diamètre plus grand que le diamètre extérieur du manchon de pression (3), et forme un guide pour une pince de pression.
